# EUROPEAN PATENT SPECIFICATION

(11) **EP 0 456 822 B1**
(45) Date of publication and mention of the grant of the patent: **19.03.1997**
(21) Application number: 89913243.5
(22) Date of filing: 01.12.1989
(51) Int. Cl.: B29C 45/14

(54) **IN-MOLD MOLDED ARTICLE HAVING MATTED SURFACE AND PRODUCTION METHOD THEREOF**
IN EINER FORM HERGESTELLTER GEGENSTAND MIT MATTER OBERFLÄCHE UND HERSTELLUNG DESSELBEN
ARTICLE MOULE DANS UN MOULE, PRESENTANT UNE SURFACE MATE ET PROCEDE DE PRODUCTION

(43) Date of publication of application: 21.11.1991
(73) Proprietor: NISSHA PRINTING CO., LTD., Nakagyo-ku Kyoto-shi Kyoto 604 (JP)
(72) Inventor: YAMAZAKI, Seiichi NISSHA PRINTING CO., LTD., Kyoto-shi Kyoto 604 (JP); TOYOOKA, Naoto NISSHA PRINTING CO., LTD., Kyoto-shi Kyoto 604 (JP)
(74) Representative: Glawe, Delfs, Moll & Partner
(86) International application number: PCT/JP89/01209
(87) International publication number: WO 91/08096

(56) References cited:
- EP-A- 0 311 079
- JP-A- 5 515 888
- PATENT ABSTRACTS OF JAPAN vol. 6, no. 228 (M-171)(1106) 13 November 1982 & JP-A-57 129 731 (MATSUSHITA DENKI SANGYO K.K.) 11 August 1982

## Description

### TECHNICAL FIELD

The present invention relates to an in-mold molded product with matted surface resistant to damage and stain and to a method for manufacturing the in-mold molded product.

### BACKGROUND ART

Conventionally, the methods for manufacturing molded products having matted surfaces are as follows:
(1) A method which locally masks the surface of a molded product, and then applies either matting paint or surface-lustering paint to the surface of the molded product by a spray coating process to obtain the product which is locally provided with both matted and lustered regions. If the molded product needs to bear superficial design such as characters or pattern in the above method, a further process such as a screen printing, a tampon printing, or a hot-stamping process, needs to be executed. On the other hand, if the molded product has a complex surface bearing projections and recesses, then it is difficult to mask the surface to prevent the coated paint from infiltrating into the masked regions, and thus, the masking process takes much time and actually makes mass production impossible. Therefore, application of the method (1) is restrained to the production of those molded products having simple configuration close to a plane surface.
(2) A method for separately constructing the matted and lustered component parts. For example, lustered component parts are made of polyvinyl chloride sheets, metallic parts, or resin-molded parts. On the other hand, those molded parts are provided by being matted by applying a mold unit having grained surface. Finally, these component parts are integrated into a complete product locally bearing matted and lustered regions. This second conventional method can only be applied to the production of molded products having simple configuration, and yet, the freedom of design is restrained, and in addition, production of such products involves high cost on the part of the manufacturer.

In addition, there is an in-mold molding method available for the production of molded products having matted surfaces. This method is executed by applying the steps described below.

First, a mat transfer member capable of forming fine projections and recesses for producing the matted effect is secured to a predetermined position inside an injection mold unit. Next, the mold unit is closed, and then resinous member is injected into the mold unit to cause the mat transfer member to tightly adhere to the surface of the molded product simultaneous with the formation of the molded product, and finally, the substrate sheet of the mat transfer member is stripped off from the molded product.

Substantially, the mat transfer member is composed of a release layer, a pattern layer, and an adhesive layer, which are sequentially stratified on a substrate sheet having its surface preliminarily matted by applying a process such as a sand blast process or a chemical etching process. Alternatively, a release layer, a pattern layer, and an adhesive layer are sequentially stratified on a substrate sheet which is provided by printing, on a surface preliminarily lustered, with a projected and recessed layer with mixed loadings such as loading pigment and having a surface with fine projections and recesses.

After completing the adhesion of the transfer layer of the mat transfer member to the molded product, either the substrate sheet or the substrate sheet together with the projected and recessed layer are stripped off and removed therefrom. Then, the projections and recesses of the substrate sheet or the projected and recessed layer are transferred on the release layer to form fine projections and recesses onto the surface of the release layer, and as a result, the surface of the in-mold molded product is matted.

Nevertheless, the molded product produced by applying the in-mold molding process cited above proves to be poor in the surface-wear characteristics because, the superficially lustered regions easily generate streaks merely by scratching the matted surface with finger nails. Likewise, there is the problem that finger prints solidly remain on the matted surface without being erased at all. Probably, this is because stains such as sebum out of the finger skin which adheres to the matted surface of the molded product varies the light scattering effect on the fine projections and recesses at the matted regions, thus eventually varying the matted effect. This is a similar phenomenon to that when water drops on a projected and recessed surface of a ground glass and a certain difference is generated between the regions without water and the matted regions holding water. Therefore, conventionally, although it is demanded that the matted design is provided on a product, those in-mold molded products cannot easily be applied to any practical object which is within easy access of human fingers because of fear of substantial degradation of the matted effect caused by stains.

Furthermore, since the fine projections and recesses provided for the in-mold molded product are fully merged by the thickness of the mat transfer member itself, the matted effect cannot fully be provided for the surface of inserted molded pieces which are produced by applying an in-mold molding unit grained by an etching process and a conventional transfer member devoid of the mat process.

JP-A-55-15888 discloses a plastic molded product covered by a transfer layer made of cloth, paper, leather etc., which covers a surface of the molded product which is substantially smooth except for projection and recesses determined by the three-dimensional shape of the product. The transfer layer provides a more or less uneven surface structure, but not a matted effect of high quality.

JP-A-57-129731 discloses a method of molding a plastic molded product having a decorated surface by positioning a transfer member in the mold and then injecting resin so as to obtain a product to which a printed layer released from the transfer member adheres. Except for the three-dimensional shape of the product the surfaces to which the printed layer adheres are substantially smooth. Even if the printed layer had a matted surface structure the same problems as described above would occur.

It is an object of the invention to provide a novel in-mold molded product, and a method for manufacturing the same, which has at the same time a very good matted effect and a high resistance to destruction of the matted effect by surface-wear, staining and other superficial damage.

According to the invention, the abovementioned object is solved by an in-mold molded product as defined in claim 1 and a method as defined in claim 3.

Therefore, when the transfer member is set in the mold unit and then an injection molding is carried out, the substrate sheet itself follows, but does not fully match the lower projections and recesses of the mold unit, due to the own thickness of the substrate sheet, and therefore the tips of these projections remain round. This permits generation of a first matted surface structure which is fully free from incurring superficial damage. Furthermore, since the surface of the transfer layer formed by the mat transfer member has very fine projections and recesses, thus providing an additional matted effect.

### BRIEF DESCRIPTION OF THE DRAWINGS

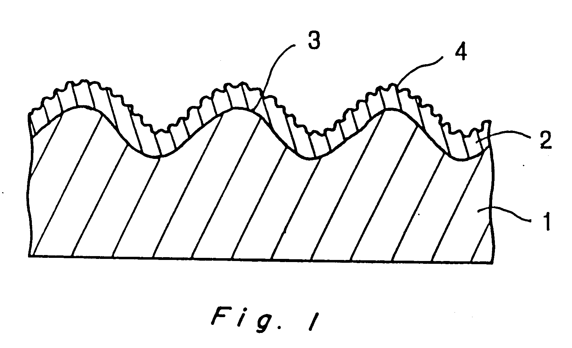

Fig. 1 is a sectional view of the in-mold molded product having a matted surface according to the present invention;

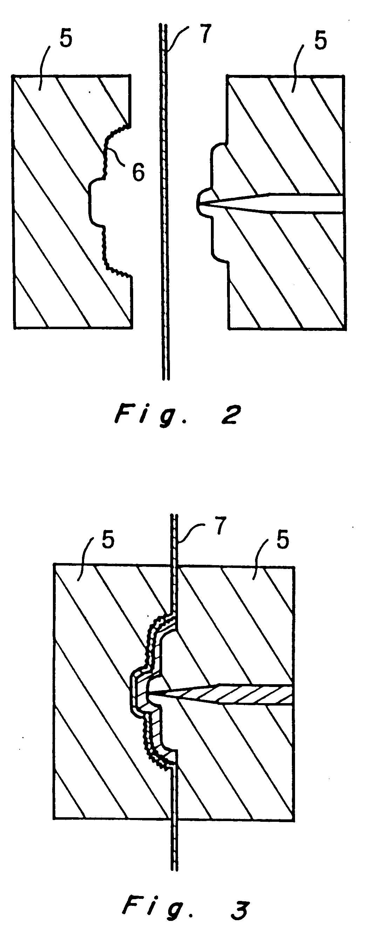

Figs. 2 and 3 are respectively sectional views showing the method of manufacturing the in-mold molded product having the matted surface according to the present invention; and

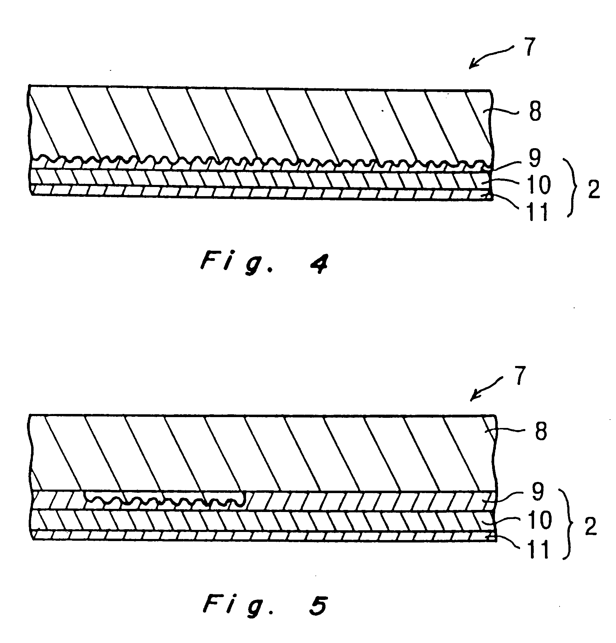

Figs. 4 and 5 are respectively sectional views of mat transfer members for use in the present invention.

### BEST MODE FOR CARRYING OUT THE INVENTION

Referring to the drawings, the present invention will be described in detail.

Substantially, a transfer member 7 has a releasable layer 9, a pattern layer 10, and an adhesive layer 11, which are sequentially formed on a substrate sheet 8. The transfer member 7 is capable of generating matted pattern or functional thin film on the surface of the in-mold molded product when transferred to it. The substrate sheet 8 of the transfer member 7 is superficially provided with matted fine projections and recesses 4. For example, the substrate sheet 8 is a sheet normally usable for a transfer member and made of any plastic film such as polyethylene terephthalate film, polypropylene film, polyethylene film, nylon film, cellophane film, or a composite film consisting of plastic film and paper. Next, a layer with fine projections and recesses is formed on the substrate sheet 8. Concretely, the substrate sheet 8 may be superficially coated with a resinous layer containing fine powder particles of silica, calcium carbonate, polyethylene wax, or glass beads, by applying a printing process, for example. Not only thermoplastic resin, but any thermosetting resin such as polyurethane resin, melamine resin, or epoxy resin, or any of those which are curable by irradiating ultra-violet rays or electronic rays, such as methyl methacrylate, may also be made available for composing the resinous layer for coating the substrate sheet 8. The substrate sheet 8 may also contain fine powder of loadings which can be mixed into the above plastic film during its formation. Alternatively, the substrate sheet 8 may be composed of any plastic film cited above containing projections and recesses 4 which are formed by applying to the surface of the plastic film any physical means such as the sand blast process or the chemical etching process. The matted regions may be formed on the entire surface of the substrate sheet 8 or only in local regions so that matted and lustered regions can be displayed by effectively combining the pattern with the design, such as the shape of the molded product.

The release layer 9 is provided on the whole surface of the substrate sheet 8. After completing the transfer process, the release layer 9 is stripped off from the substrate sheet 8. As a result, in correspondence with those projections and recesses formed on the surface of the substrate sheet 8, projections and recesses complementary to those of the substrate sheet 8 are formed on the entire surface of the release layer 9. After completing the transfer process, the release layer 9 itself makes up the surface of the objective molded product, and thus, the release layer 9 also has the function to protect the transfer layer 2. The release layer 9 is formed on the substrate sheet 8 by applying any conventional printing means such as roll-coating process, gravure printing process, or screen printing process. Thermoplastic resin such as acrylic resin or polyvinyl resin may be used for the release layer 9. In order to fully exert the role of protective layer, the release layer 9 may also be composed of thermosetting resin such as polyurethane resin or epoxy resin, or any resin curable by applying ultra-violet rays or electronic rays, such as methyl methacrylate.

The adhesive layer 11 secures the transfer layer 2 of the transfer member 7 to a product to which it is to be transferred. Either thermosensitive resin or pressure-sensitive resin compatible with the material of the molded plastic product 1 to which it is to be transferred is properly selected for the adhesive layer 11. For example, if the product is made of AS (acrylonitrile-styrene) resin, then, either acrylic resin or polyvinyl resin is suitable. On the other hand, if the product is made of polypropylene resin, then, either chlorinated polypropylene resin or ethylene-vinyl acetate copolymer resin is suitable.

An arbitrary pattern layer 10 or an evaporated metallic layer is provided between the release layer 9 and the adhesive layer 11 optionally covering the entire surface or local regions. The pattern layer 10 is formed by applying any conventional printing means such as a gravure printing process or a screen printing process using ink composed of resin containing either pigment or dye and a variety of additives. The evaporated metallic layer is provided in order to visually appeal the sense of the matted effect yielded by the fine projections and recesses 4 formed on the surface of the release layer 9. The evaporated metallic layer can be generated by evaporating metal such as aluminum, chrome, or nickel by applying either a vacuum deposition process, or an ion plating deposition process, or a sputtering process, for example.

If it is deemed necessary to promote compatibility of those components, then, a pre-anchor layer may be provided between the release layer 9 and the evaporated metallic layer. If the layer used for the formation of the projections and recesses 4 is provided below the pre-anchor layer, the layer containing these projections and recesses 4 reduces the matting effect. Furthermore, in order to promote adhesion between the evaporated metallic layer and the adhesive layer 11, a post-anchor layer may be provided between the evaporated metallic layer and the adhesive layer 11 as required.

The materials of the release layer 9, the pattern layer 10, the layer containing the projections and recesses, the evaporated metallic layer, the adhesive layer 11, and the pre-anchor and post-anchor layers are preferably selected to obtain good adhesion between the adjacent layers.

A mold unit 5 suitable for executing the in-mold molding operation is composed of movable and stationary mold components. The transfer member 7 is secured to the movable mold component. The cavity section 6 is defined by closing the movable and stationary mold components 5. Projections and recesses 3 needed for the formation of the matted effect on the surface of the in-mold molded product are provided on the product-side surface of the movable mold component 5 which is in contact with the mat transfer member 7 held in the cavity section 6. These projections and recesses 3 are respectively greater than the projections and recesses 4 formed by the mat transfer member 7. Resinous material for molding the product is not directly brought into contact with the surface of the movable mold component defining part of the cavity section 6, but instead, the transfer member 7 is held between the movable and stationary mold components 5, and thus, if excessively fine projections and recesses are provided, then, the projected and recessed surface cannot be formed on the surface of the molded product.

An in-mold molding operation is executed using the mat transfer member 7 and the mold unit 5. First, the mat transfer member 7 is secured to a predetermined position of the mold unit 5. If the matted surface is formed in local regions, the matted sections of both the mat transfer member 7 and the mold unit 5 are made to correctly match with each other by the use of a film feeding device having a positioning mechanism. Next, the mold unit 5 is closed, and then the selected resinous material is injected. After cooling off the injected resin, the mold unit 5 is opened to extract the molded piece therefrom. Next, the substrate sheet 8 of the transfer member 7 is stripped off from the molded piece, whereby the in-mold molded piece having the matted surface is obtained.

In this way, the transfer member 7 provides very fine projections and recesses 4 on the surface of the projections and recesses 3 of the molded piece produced by the mold unit 5. The tips of all the projections 3 formed by the mold unit 5 are rounded because the thickness of the substrate sheet 8 prevents it from contacting the lower projections and the shallow recesses of the projections and recesses 3 of the mold unit 5. By virtue of the round tips of the projections of the projections and recesses 3 formed by the mold unit 5, the whole matted surface remains free from incurring superficial damage, thus securely producing damage-free matted surface. The surface of the transfer layer 2 formed by the transfer member 7 has very fine projections and recesses 4, thus providing a very satisfactory matted effect.

Next, concrete results from the execution of the in-mold molding method according to the invention are shown below.

### Embodiment 1

In a mold unit for in-mold molding operation on which recesses with about 0.3 through 50 microns depth are formed as mat processing, a transfer member is secured. Then, the in-mold molding operation is executed using of AS resin (acrylonitrile-styrene resin) under the following injection conditions. The molded product proves to be resistant to superficial damage and stains, and yet, fully retains the matted effect.

### Infection conditions (molding machine J-150SA manufactured by Nippon Seikohsho Co., Ltd.)

| | |
|---|---|
| Mold temperature: | 50°C |
| Cylinder temperature: | 220°C |
| Injection pressure: | 1,190kg/cm² |
| Retained pressure: | 850kg/cm² |
| Number of the rotation of the screw: | 55r.p.m. |

The injection speed is maximized in the molding machine.

### Embodiment 2

In a mold unit for in-mold molding operation on which recesses with about 0.3 through 50 microns depth are locally formed as the mat processing, a transfer member including a substrate sheet with 38 microns thickness and having dual-phase matted effect is secured. Then, the in-mold molding operation is executed by the use of AS resin. The molded product exhibits the dual-phase matted effect in local regions, and yet, produces a surface with fully satisfactory physical properties and bearing lustered regions and noticeable design effect.

### Embodiment 3

In a mold unit for in-mold molding operation on which recesses with about 50 through 300 microns depth are formed by an etching process as the mat processing, a mat transfer member including a substrate sheet with 38 microns thickness and having dual-phase matted effect is secured. Then, the in-mold molding operation is executed by the use of AS resin. The molded product exhibits the dual-phase matted effect in local regions, and yet, produces the surface with fully satisfactory physical properties and bearing lustered regions and noticeable design effect.

### INDUSTRIAL APPLICABILITY

As is clear from the above description, the in-mold molded product with the matted surface according to the invention provides a transfer layer containing finer projections and recesses over projections and recesses on the surface of the plastic molded product, the projections and recesses of the transfer layer being finer than those of the plastic molded product, whereby projections and recesses having dual-phase sizes are formed on the plastic molded product. Therefore, the in-mold molded product is resistant to superficial damage and has a stain-free surface with the excellent matted effect.

The method for manufacturing the in-mold molded product with a matted surface according to the invention is such that using both a transfer member capable of forming fine projections and recesses for producing the matted effect and a mold unit on which projections and recesses greater than those of the transfer member are formed at a cavity section thereof, the mat transfer member is secured inside of the mold unit and then resin is injected to perform the in-mold molding operation. Thus, the above-described in-mold molded product can be easily produced.

## Claims

1. An in-mold molded product comprising:
a plastic molded product (1) having at least a portion of its surface formed with molded projections and recesses (3) suitable to produce a matted surface effect,
and a transfer layer (2) bonded to at least said portion of the surface so as to follow said molded projections and recesses (3),
said transfer layer (2) being provided with a matted surface formed by fine projections and recesses (4) which are finer than said molded projections and recesses (3),
whereby said surface portion of the plastic molded product (1) exhibits a dual matted effect obtained by the combination of said molded projections and recesses (3) and said finer projections and recesses (4) of the transfer layer (2).

2. A product as claimed in claim 1, wherein the transfer layer (2) is a multi-layer comprising at least a release layer (9) releasable from a substrate sheet (8) and being provided with said matted surface, a pattern layer (10) and an adhesive layer (11).

3. A method for manufacturing an in-mold molded product comprising the steps of:
providing a mold unit (5) having a predetermined region of its cavity surface (6) formed with projections and recesses (3) suitable to produce a matted surface effect of the molded product;
securing a transfer member (7) on at least said predetermined region of the cavity surface (6) of the mold unit (5), said transfer member including a releasable transfer layer (2) having fine projections and recesses (4) finer than the projections and recesses (3) of the cavity surface (6) of the mold unit (5);
injecting resin into the cavity of the mold unit (5) to perform an in-mold operation to obtain the in-mold molded product having a surface with molded projections and recesses (3) complementary to those of the cavity surface (6) of the mold and having the transfer layer (2) released from the transfer member (7) covering said surface so as to produce a dual matted effect of the product by a combination of said molded projections and recesses (3) and said finer projections and recesses of the transfer layer (2).

4. A method as claimed in claim 3, wherein said transfer member (7) includes a substrate sheet (8), a release layer (9), a pattern layer (10) and an adhesive layer (11), wherein the transfer member (7) is arranged inside the mold unit (5) so that the substrate sheet (8) contacts said cavity surface (6) and the adhesive layer (11) contacts the injected resin, and wherein the substrate sheet (8) is stripped of from after removing the product from the mold unit (5).

## Patentansprüche

1. In einer Form geformtes Produkt mit
einem aus Kunststoff geformten Produkt (1), das auf mindestens einem Teil seiner Oberflache mit geformten Vorsprüngen und Vertiefungen (3) versehen ist, die einen mattierten Oberflächeneffekt ergeben,
und einer Transferschicht (2), die mit dem mindestens einen Teil der Oberfläche so verbunden ist, daß sie den geformten Vorsprüngen und Vertiefungen (3) folgt,
wobei die Transferschicht (2) mit einer mattierten Oberfläche aus feinen Vorsprüngen und Vertiefungen (4) versehen ist, die feiner sind als die geformten Vorsprünge und Vertiefungen (3),
wodurch der Teil der Oberfläche des geformten Kunststoffproduktes (1) einen doppelten Mattierungseffekt aufweist, der durch die Kombination der geformten Vorsprünge und Vertiefungen (3) und der feineren Vorsprünge und Vertiefungen (4) der Transferschicht (2) erhalten wird.

2. Produkt nach Anspruch 1,
bei dem die Transferschicht (2) eine Mehrfachschicht ist mit mindestens einer Ablöseschicht (9), die von einer Trägerfolie (8) ablösbar und mit der mattierten Oberfläche versehen ist, sowie einer Musterschicht (10) und einer Klebschicht (11).

3. Verfahren zur Herstellung eines in einer Form geformten Produktes, mit den Schritten:
Vorsehen einer Formeinheit (5), bei der auf einem vorgegebenen Bereich ihrer Kavitätsoberfläche (6) Vorsprünge und Vertiefungen (3) zur Erzeugung eines mattierten Oberflächeneffektes des geformten Produktes geformt sind,
Befestigen eines Transferelementes (7) mindestens auf dem vorgegebenen Bereich der Kavitätsoberfläche (6) der Formeinheit (5), wobei das Transferelement eine ablösbare Transferschicht (3) aufweist, die feine Vorsprünge und Vertiefungen (4) hat, die feiner sind als die Vorsprünge und Vertiefungen (3) der Kavitätsoberfläche (6) der Formeinheit (5),
Injizieren von Kunstharz in die Kavität der Formeinheit (5) zur Durchführung eines Formungsvorgangs zum Erhalten des in der Form geformten Produktes, das an seiner Oberfläche geformte Vorsprünge und Vertiefungen (3) komplementär zu denen der Kavitätsoberfläche (6) der Form aufweist, und bei dem die von dem Transferelement (7) abgelöste Transferschicht (2) die Oberfläche derart bedeckt, daß ein doppelter Mattierungseffekt des Produktes erzeugt wird durch Kombination der geformten Vorsprünge und Vertiefungen (3) und der feineren Vorsprünge und Vertiefungen (3) der Transferschicht (2).

4. Verfahren nach Anspruch 3,
bei dem das Transferelement (7) eine Trägerfolie (8), eine Ablöseschicht (9), eine Musterschicht (10) und eine Klebeschicht (11) aufweist, wobei das Transferelement (7) innerhalb der Formeinheit so angeordnet wird, daß die Trägerfolie (8) an der Kavitätsoberfläche (6) anliegt und die Klebschicht (11) mit dem injizierten Kunstharz in Berührung kommt, und wobei die Trägerfolie (8) nach Entnahme des Produktes aus der Formeinheit (5) abgezogen wird.

## Revendications

1. Article moulé dans un moule, comprenant:
un article moule (1) en matière plastique dont au moins une partie de la surface comporte des reliefs et des creux moulés (3) permettant de produire un effet de surface mate,
et une couche de transfert (2) collée au moins à ladite partie de la surface afin d'épouser lesdits reliefs et creux moulés (3),
ladite couche de transfert (2) étant pourvue d'une surface mate constituée par de petits reliefs et creux (4) plus petits que lesdits reliefs et creux moulés (3),
grâce à quoi ladite partie de surface de l'article moulé (1) en matière plastique présente un double effet de mat obtenu par la combinaison desdits reliefs et creux moulés (3) et desdits reliefs et creux plus petits (4) de la couche de transfert (2).

2. Article selon la revendication 1, dans lequel la couche de transfert (2) est une multicouche comprenant au moins une couche de séparation (9) séparable d'une feuille de substrat (8) et pourvue de ladite surface mate, une couche (10) à motif et une couche adhésive (11).

3. Procédé pour fabriquer un article moulé dans un moule, comprenant les étapes consistant à:
réaliser un dispositif de moule (5) dont une zone prédéterminée de la surface (6) de cavité comporte des reliefs et des creux (3) permettant de produire un effet de surface mate sur l'article moulé;
fixer un élément de transfert (7) au moins sur ladite zone prédéterminée de la surface (6) de cavité du dispositif de moule (5), ledit élément de transfert comportant une couche de transfert séparable (2) ayant de petits reliefs et creux (4) plus petits que les reliefs et creux (3) de la surface (6) de cavité du dispositif de moule (5);
injecter une résine dans la cavité du dispositif de moule (5) pour effectuer une opération dans le moule afin d'obtenir que l'article moulé dans le moule ait une surface à reliefs et creux moulés (3) complémentaires de ceux de la surface (6) de cavité du moule et que sa couche de transfert (2) séparée de l'élément de transfert (7) couvre ladite surface de façon à produire un double effet de mat sur l'article par une combinaison desdits reliefs et creux moulés (3) et desdits reliefs et creux plus petits de la couche de transfert (2).

4. Procédé selon la revendication 3, dans lequel ledit élément de transfert (7) comporte une feuille de substrat (8), une couche de séparation (9), une couche (10) à motif et une couche adhésive (11), l'élément de transfert (7) étant disposé à l'intérieur du dispositif de moule (5) pour que la feuille de substrat (8) vienne au contact de la résine injectée, et la feuille de substrat (8) étant détachée après que l'article a été sorti du dispositif de moule (5).
